# EUROPEAN PATENT APPLICATION

(11) **EP 1 516 886 A1**
(43) Date of publication of application: **23.03.2005**
(21) Application number: 04021183.1
(22) Date of filing: 07.09.2004
(51) Int. Cl.: C08G 18/46, C08G 18/38, C09D 175/02

(54) **Flexibilized polyaspartic esters**

(30) Priority: 17.09.2003 US 664194
(71) Applicant: Bayer MaterialScience LLC, Pittsburgh PA 15205 (US)
(72) Inventor: Roesler, Richard R, Wexford PA 15090-7583 (US); Wicks, Douglas A, Hattiesburg MS 39401 (US); Henderson, Karen M, Coraopolis PA 15108-9131 (US)
(74) Representative: Perchenek, Nils, Dr.

(57) **Abstract**

The present invention is directed to a method of preparing polyaspartates, polyaspartates so-produced and the use thereof in a coating composition. The process broadly comprises a) transesterifying an α,β-unsaturated ester with a hydroxy functional material, b) reacting the transesterified product with a primary amine-containing compound and c) reacting any remaining primary amine groups with an α,β-unsaturated ester

## Description

### BACKGROUND OF THE INVENTION

Current polyaspartic ester technology is generally limited to the use of commercially available polyamines. For the most part, this technology has been limited to difunctional aspartates which are of relatively low molecular weight. When these aspartates are crosslinked with polyisocyanates, the resultant films have a high crosslink density. Furthermore, the urea groups that are present in these films convert to hydantoin groups with concurrent loss of alcohol and loss of film weight. The loss in film weight results in increased stress within the film leading to film shrinkage, or in the case of paint, to cracking and loss of adhesion to the substrate.

Typical of the aspartate esters used in the art, are those described in U.S. Patents 5,126,170 and 5,236,741 and in published Canadian Application 2,111,927.

British Patent 1,017,001 describes the preparation of a product by reacting a polyisocyanate with a polyester. The polyester is the addition product of a primary or secondary amine to a double bond which is in the α,β-posiiton to an ester group of an α,β-unsaturated polyester. The α,β-unsaturated polyester is prepared by esterifying or transesterifying an α,β-unsaturated monocarboxylic and/or polycarboxylic acid or derivatives thereof with a polyhydric alcohol. The products described have residual acid content. As is known in the art, the presence of acid groups is undesirable during the reaction of aspartates with isocyanates.

Hyperbranched polyasparates are also known (see U.S. Patent 5,561,214). These hyperbranched polyasparatates are prepared by either self condensing or tranesterifying at least a portion of the hydroxy and ester groups of a hydroxy aspartate.

### DESCRIPTION OF THE INVENTION

The present invention is directed to the preparation of a polyaspartate by
A) transesterifying i) an α,β-unsaturated ester of the formula:

   R₁OOC-C(R₃)=C(R₄)-COOR₂

   where R₁ and R₂ may be identical or different and represent organic groups which are inert towards isocyanate groups at 100°C or less, and R₃ and R₄ may be identical or different and represent hydrogen or organic groups which are inert towards isocyanate groups at 100°C or less,
   with ii) a hydroxyl functional material containing n hydroxyl groups per molecule and having a number average molecular weight of from about 62 to about 3000,
   at a molar ratio of from n moles of ester per mole of n-hydroxy functional material to n+8 moles of ester per mole of n-hydroxy functional material where n represents number of hydroxy groups in said hydroxy functional material and is a number of from 2 to 8,
B) reacting the resultant product with a compound containing one or more primary amine groups in an amount of at least one mole of amine compound per α,β-unsaturated ester group, and
C) reacting any remaining primary amine groups with an unsaturated ester of the formula:

   R₁OOC-C(R₃)=C(R₄)-COOR₂

   where R₁, R₂ , R₃ and R₄ are as defined above.

Suitable α,β-unsaturated esters are those of the formula:

R₁OOC-C(R₃)=C(R₄)-COOR₂

where
R₁ and R₂ may be identical or different and represent organic groups which are inert towards isocyanate groups at 100°C or less, preferably an alkyl group of from 1 to 9 carbon atoms and more preferably methyl, ethyl and butyl, and
R₃ and R₄ may be identical or different and represent hydrogen or organic groups which are inert towards Isocyanate groups at 100°C or less, preferably hydrogen.

Specifically useful esters include the dimethyl, diethyl and di-n-butyl and mixed alkyl esters of maleic acid and fumaric acid and the corresponding maleic or fumaric acid esters substituted by methyl in the 2-and/or 3-position. Suitable maleates or fumarates for preparing the aspartates of the present invention include dimethyl, diethyl, di-n-propyl, di-isopropyl, di-n-butyl and di-2-ethylhexyl maleates, methylethylmaleate and the corresponding fumarates.

The esters noted are transesterified with an n-hydroxyl functional material (where n is a number of from 2 to 8) and having a number average molecular weight of from about 62 to about 3000. Useful hydroxy functional materials include ethylene glycol; diethylene glycol; triethylene glycol; propylene glycol; dipropylene glycol; butane diols; hexane diols; glycerin; trimethylolethane; trimethylolpropane; pentaerythritol; hexane triols; mannitol; sorbitol; glucose; fructose; mannose; sucrose; and propoxylated and/or ethoxylated adducts of any of the above-noted hydroxy functional materials having number average molecular weights of less than about 3000. Mixtures of the above-noted hydroxy functional materials can also be used.

The molar ratio of ester to hydroxy functional material is from n moles of ester per mole of n-hydroxy functional material to n+8 moles of ester per mole of n-hydroxy functional material where n represents number of hydroxy groups in said hydroxy functional material and is a number of from 2 to 8, preferably from n moles of ester per mole of n-hydroxy functional material to n+4 moles of ester per mole of n-hydroxy functional material, and most preferably n moles of ester per mole of n-hydroxy functional material. At the most preferred ratio, the product will contain α,β-unsaturated groups in an amount equal to the number of hydroxy groups present in the hydroxy functional material.

The transesterification reaction is conducted at a temperature of from about 50 to about 300°C, preferably from about 80 to about 200°C, and most preferably from about 100 to about 150°C. The reaction may be conducted in the presence of a transesterification catalyst. Examples of suitable catalysts include the known titanium, tin, zinc, antimony and lead compounds, such as titanium(IV) butoxide, tetrakis(2-ethylhexyl)-titanate, tin(IV) oxide, dibutyltin oxide, dioctyltin oxide, dibutyltin dilaurate, dioctyltin dilaurate, butyltin hydroxide oxide, octyltin hydroxide, zinc(IV) oxide, zinc(II) oxide, lead phenolate and lead acetate.

The transesterification product is then reacted with a compound containing one or more primary amine groups and containing no other groups reactive with isocyanate groups in an amount of at least one mole of amine compound per α,β-unsaturated ester group.

Useful monoamines include methylamine; ethylamine; propyl- and isopropylamine; butyl- and isobutylamine; cyclohexylamine; benzylamine; toluidine; and aniline.

The polyamines useful herein include i) high molecular weight amines having molecular weights of 400 to about 10,000, preferably 800 to about 6,000, and ii) low molecular weight amines having molecular weights below 400. The molecular weights are number average molecular weights (Mₙ) and are determined by end group analysis (NH number). Examples of these polyamines are those wherein the amino groups are attached to aliphatic, cycloaliphatic, araliphatic and/or aromatic carbon atoms.

Suitable low molecular polyamine starting compounds include ethylene diamine, 1,2- and 1,3-propane diamine, 2-methyl-1,2-propane diamine, 2,2-dimethyl-1,3-propane diamine, 1,3- and 1,4-butane diamine, 1,3- and 1,5-pentane diamine, 2-methyl-1,5-pentane diamine, 1,6-hexane diamine, 2,5-dimethyl-2,5-hexane diamine, 2,2,4-and/or 2,4,4-trimethyl-1,6-hexane diamine, 1,7-heptane diamine, 1,8-octane diamine, 1,9-nonane diamine, 1,10-decane diamine, 1,11-undecane diamine, 1,12-dodecane diamine, 1-amino-3-aminomethyl-3,5,5-trimethyl cyclohexane, 2,4- and/or 2,6-hexahydrotoluylene diamine, 2,4'- and/or 4,4'-diamino-dicyclohexylmethane, 3,3'-dialkyl-4,4'-diamino-dicyclohexyl methanes (such as 3,3'-dimethyl-4,4'-diamino-dicyclohexyl methane and 3,3'-diethyl-4,4'-diamino-dicyclohexyl methane), 1,3- and/or 1,4-cyclohexane diamine, 1,3-bis(methylamino)-cyclohexane, 1,8-p-menthane diamine, hydrazine, hydrazides of semicarbazido carboxylic acids, bis-hydrazides, bis-semi-carbazides, phenylene diamine, 2,4- and 2,6-toluylene diamine, 2,3- and 3,4-toluylene diamine, 2,4'- and/or 4,4'-diaminodiphenyl methane, higher functional polyphenylene polymethylene polyamines obtained by the aniline/formaldehyde condensation reaction, N,N,N-tris-(2-amino-ethyl)-amine, guanidine, melamine, N-(2-aminoethyl)-1,3-propane diamine, 3,3'-diamino-benzidine, polyoxypropylene amines, polyoxy-ethylene amines, 2,4-bis-(4'-aminobenzyl)-aniline and mixtures thereof.

Preferred polyamines are 1-amino-3-aminomethyl-3,5,5-trimethyl-cyclohexane (isophorone diamine or IPDA), bis-(4-aminocyclo-hexyl)-methane, bis-(4-amino-3-methylcyclohexyl)-methane, 1,6-diamino-hexane, 2-methyl pentamethylene diamine and ethylene diamine.

Suitable high molecular weight polyamines amine-terminated polyethers such as the Jeffamine resins available from Huntsman.

The reaction between the transesterified product and the amine is conducted at temperatures of from 0 and 100°C, preferably from 20 to 80°C and more preferably from 20 to 60°C in an amount of at least one mole of amine compound per α,β-unsaturated ester group up to 5 moles of amine compound per α,β-unsaturated ester group. The reaction time may be from about 1 to about 4 hours, depending upon the type of amine and the desired maximum residual concentration of reactants in the reaction mixture. If the resultant product still contains primary amine groups, it is then reacted with an unsaturated ester of the formula:

R₁OOC-C(R₃)=C(R₄)-COOR₂

where R₁, R₂, R₃ and R₄ are as defined above. This reaction is typically conducted at a temperature of from about 50 to about 100°C, for times ranging from about 1 to about 4 hours. The ratio of reactants is chosen so that all of the primary amine groups are reacted. The ester used in this step may be the same or different from the ester used in step A).

Any of the steps of the process of the present invention may either be performed in solution or in the absence of a solvent. Solvent may also be added after the synthesis process, for example, to lower the viscosity. Suitable solvents include any organic solvents, preferably those known from surface coating technology. Examples include acetone, methyl ethyl ketone, methyl isobutyl ketone, n-butyl acetate, methoxypropyl acetate, toluene, xylene and higher aromatic solvents (such as the Solvesso solvents from Exxon).

The aspartates prepared according to the invention may be directly used as reactive components for polyisocyanates after concluding the synthesis process.

One use of the aspartates of the present invention is to prepare coatings from two-component coating compositions containing, as binder,
a) a polyisocyanate component and
b) an isocyanate-reactive component containing
   b1) the aspartates of the invention and
   b2) optionally other known isocyanate-reactive components.

Suitable polyisocyanate components a) are known and include the polyisocyanates known from polyurethane chemistry, e.g., low molecular weight polyisocyanates and lacquer polyisocyanates prepared from these low molecular weight polyisocyanates. Preferred are the lacquer polyisocyanates, which are known from surface coating technology. These lacquer polyisocyanates contain biuret groups, isocyanurate groups, allophanate groups, uretdione groups, carbodiimide groups and/or urethane groups and are preferably prepared from (cyclo)aliphatic polyisocyanates.

Suitable low molecular weight polyisocyanates for use in accordance with the present invention or for preparing the lacquer polyisocyanates are those having a molecular weight of 140 to 300, such as 1,4- tetramethylene diisocyanate, 1,6-hexamethylene diisocyanate (HDI), 2,2,4- and/or 2,4,4-trimethyl-hexamethylene diisocyanate, dodecamethylene diisocyanate, 2-methyl-1,5-diisocyanatopentane, 1,4-diisocyanatocyclohexane, 1-isocyanato-3,3,5-trimethyl-5-isocyanato-methylcyclohexane (IPDI), 2,4- and/or 4,4' diisocyanato-dicyclohexyl-methane, 1-isocyanato-1-methyl-3(4)-isocyanatomethyl-cyclohexane (IMCl), 2,4- and/or 2,6-hexahydrotoluylene diisocyanate (H₆TDI), 2,4-and/or 4,4'-diisocyanatodiphenylmethane or mixtures of these isomers with their higher homologs (which may be obtained in known manner by the phosgenation of aniline/formaldehyde condensates), 2,4- and/or 2,6-diisocyanatotoluene, and mixtures thereof. The use of low molecular weight polyisocyanates themselves is not preferred. Also lacquer polyisocyanates prepared from aromatic polyisocyanates, such as 2,4-and/or 2,6-diisocyanatotoluene, are also less preferred. The lacquer polyisocyanates containing urethane groups are preferably based on low molecular weight polyhydroxyl compounds having molecular weights of 62 to 300, such as ethylene glycol, propylene glycol and/or trimethylolpropane.

Preferred lacquer polyisocyanates for use as component a) are those based on 1,6-hexamethylene diisocyanate and having an NCO content of 16 to 24 wt.% and a maximum viscosity at 23°C of 10,000, preferably 3000 mPa.s.

Component b1 ) is selected from the aspartates of the present invention. Preferably, X represents a divalent hydrocarbon group obtained by removing the amino groups from 1-amino-3-aminomethyl-3,5,5-trimethyl-cyclohexane (isophorone diamine or IPDA), bis-(4-aminocyclo-hexyl)-methane, bis-(4-amino-3-methylcyclohexyl)-methane, 1,6-diamino-hexane, 2-methyl pentamethylene diamine and ethylene diamine.

Particularly preferred starting components b1) include those aspartates in which R₃ and R₄ represent C₁ to C₈ alkyl groups such as methyl, ethyl, n-propyl, isopropyl, n-butyl or 2-ethylhexyl.

Optional starting components b2) are known compounds containing at least two isocyanate-reactive groups, including groups which react with isocyanate groups under the effect of either moisture or/and heat. Examples include hydroxy-functional polyacrylates and polyesterpolyols. In addition, diaspartates of the type disclosed in U.S. Patents 5,126,170, 5,214,086, 5,236,741, 5,243,012, 5,364,955, 5,412,056, 5,623,045, 5,736,604, 6,183,870, 6,355,829, 6,458,293 and 6,482,333, published European patent application 667,362 and published Canadian application 2,111,927, can also be used as optional components b2). Aspartates containing aldimine groups can also be used (see U.S. Patents 5,489,704, 5,559,204 and 5,847,195). Mixtures of the various optional compounds may also be used.

In the binders used according to the invention, the amounts of components a), b1) and (optionally) b2) are selected such that the equivalent ratio isocyanate groups to isocyanate-reactive groups is from about 0.8:1 to about 2.0:1, and preferably from about 0.8:1 to about 1.2:1.

The binders, according to the invention, are prepared by mixing the individual components either in the absence of a solvent or in the presence of the solvents which are conventionally used in polyurethane surface coating technology. Suitable solvents include ethyl acetate, butyl acetate, methoxypropyl acetate, methyl isobutyl ketone, methyl ethyl ketone, xylene, N-methylpyrrolidone, petroleum spirit, chlorobenzene, Solvesso solvent or mixtures thereof.

Preferably, the ratio by weight binder components a) and b) to solvent in the coating compositions according to the invention is from about 40:60 to about 100:0, more preferably from about 60:40 to about 100:0.

The coating compositions may also contain the known additives from surface coating technology. These include pigments, fillers, flow control agents, catalysts and anti-settling agents.

The properties of the coatings obtained from the coating compositions according to the invention may be adjusted by appropriate selection of the type and ratios of starting components a), b1) and b2).

The coating compositions may be applied to any substrate in a single layer or in several layers by known methods, e.g., by spraying, painting, immersing, flooding or by using rollers or spreaders. The coating compositions according to the invention are suitable for preparing coatings on substrates, such as metals, plastics, wood or glass. The coating compositions are especially suitable for coating steel sheeting, which is used for the production of vehicle bodies, machines, cladding panels, barrels and containers. The substrates may be provided with suitable primer coats prior to applying the coating compositions according to the invention. Drying of the coatings may take place at a temperature of about 0 to 160°C.

The process for producing coatings using the aspartates of the present invention may also be used for the production of prepolymers containing urea, urethane, allophanate and/or biuret structures.

The aspartates of the present invention may be directly used after completion of the synthesis process. As a result of the low concentration of maleates, fumarates and primary amino groups, these products are not only substantially toxicologically and physiologically harmless, they also exhibit a reasonable, as opposed to a vigorous, reactivity towards isocyanates. Due to their low viscosity, they are a more than suitable alternative, as reactive diluents, to the environmentally polluting organic solvents previously used and may therefore be used in high quality, low-solvent or even solvent-free high solids two-component coating compositions.

All parts and percentages are by weight, unless otherwise indicated.

### EXAMPLES

### Transesterification:

To a round bottom flask fitted with stirrer, thermocouple and vacuum apparatus were added 90 grams of 1,4-butanediol (2.0 alcohol eq), 688 grams of diethyl maleate (8.0 ester eq) and 0.78 grams of titanium (IV) isopropoxide transesterification catalyst. A vacuum was applied to ∼10 torr and the reaction flask was then heated to 100°C for two hours. The reaction was then heated to 150°C for one hour. A gas chromatograph of the sample showed that no butanediol remained. The unsaturation number was 66.3 mg maleic acid per g resin (theory, 67.6). The viscosity of the bis maleate was 13.1 cps at 25°C.

### Example 1:

To a round bottom flask fitted with stirrer, thermocouple, nitrogen inlet and addition funnel were added 197.25 grams (1.15 eq) of the bis maleate from above. 120.1 grams (1.15 eq) of bis (para-aminocyclohexyl). methane was added through the addition funnel over a two hour period. The reaction was heated for an additional four hours. After one week storage at room temperature, the product had an unsaturation number of 4.53 indicating 91% reaction. After eight weeks the unsaturation number was 1.80 indicating 96% reaction. The viscosity was 14,000 cps at 25°C and the amine number was 199.9 mg KOH per g resin.

### Example 2:

To a round bottom flask fitted with stirrer, thermocouple, nitrogen inlet and addition funnel were added 200.0 grams (1.16 eq) of the bis maleate from above. 67.4 grams (1.16 eq) of 1,6-hexanediamine was then added through the addition funnel over a two hour period. The reaction was heated for an additional four hours. After two weeks storage, the unsaturation number was 0.5 indicating 99% reaction. The viscosity was 950 cps at 25°C and the amine number was 237.8 mg KOH per g resin.

### Example 3:

19.4 grams (0.1 eq) of Desmodur N 3300 (a commercially available trimer containing polyisocyanate based on 1,6-hexamethylene diisocyanate from Bayer Polymers LLC) was combined with 28.1 grams (0.1 eq) of the polyaspartic ester from Example 1. The mixture was stirred for one minute and then drawn down on glass with a Byrd Applicator on glass. After sitting for twenty-four hours the coating passed 100 double rubs using methyl ethyl ketone; and had a pendulum hardness of 174 seconds.

### Example 4:

14.0 grams (0.059 eq) of the polyaspartic ester from Example 2 was combined with 4.5 grams n-butyl acetate. This mixture was combined with 11.5 grams (0.059 eq) of Desmodur N 3300. The sample gelled in the mixing cup in less than 30 seconds.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for the preparation of a polyaspartate comprising:
A) transesterifying i) an α,β-unsaturated ester of the formula:
R₁OOC-C(R₃)=C(R₄)-COOR₂
where R₁ and R₂ may be identical or different and represent organic groups which are inert towards isocyanate groups at 100°C or less, and R₃ and R₄ may be identical or different and represent hydrogen or organic groups which are inert towards isocyanate groups at 100°C or less,
with ii) an hydroxyl functional material containing n hydroxyl groups per molecule and having a number average molecular weight of from about 62 to about 3000,
at a molar ratio of from n moles of ester per mole of n-hydroxy functional material to n+8 moles of ester per mole of n-hydroxy functional material where n represents number of hydroxy groups in said hydroxy functional material and is a number of from 2 to 8,
B) reacting the resultant product with a compound containing one or more primary amine groups in an amount of at least one mole of amine compound per α,β-unsaturated ester group, and
C) reacting any remaining primary amine groups with an unsaturated ester of the formula:
R₁OOC-C(R₃)=C(R₄)-COOR₂
where R_{1,} R_{2,} R₃ and R₄ are as defined above.

2. The process of Claim 1, wherein R₁ and R₂ represent alkyl groups containing 1 to 9 carbon atoms.

3. The process of Claim 1, wherein R₃ and R₄ represent hydrogen.

4. The process of Claim 1, wherein said molar ratio is from n moles of ester per mole of n-hydroxy functional material to n+4 moles of ester per mole of n-hydroxy functional material.

5. The process of Claim 4, wherein said molar ratio is from n moles of ester per mole of n-hydroxy functional material.

6. The process of Claim 1, wherein the transesterification is conducted at a temperature of from about 50 to about 300°C.

7. The process of Claim 1, wherein said compound containing primary amine groups is selected from the group consisting of 1-amino-3-aminomethyl-3,5,5-trimethyl-cyclohexane, bis-(4-aminocyclo-hexyl)-methane, bis-(4-amino-3-methylcyclohexyl)-methane, 1,6-diamino-hexane, 2-methyl pentamethylene diamine and ethylene diamine.

8. The process of Claim 1, wherein said amount in step B) is from at least one mole of amine compound per α,β-unsaturated ester group up to 5 moles of amine compound per α,β-unsaturated ester group.

9. The product of the process of Claim 1.

10. A coating composition comprising:
a) a polyisocyanate component and
b) an isocyanate-reactive component containing
b1) the aspartate of Claim 1 and
b2) optionally other isocyanate-reactive components.
